**Europäisches Patentamt**

**European Patent Office**

**Office européen des brevets**

(11) Veröffentlichungsnummer: **0 141 897**
A2

# EUROPÄISCHE PATENTANMELDUNG

(21) Anmeldenummer: **84105093.3**

(22) Anmeldetag: **05.05.84**

(51) Int. Cl.⁴: **B 21 C 37/12,** B 23 K 9/02, B 23 K 9/235

(30) Priorität: **30.08.83 DE 3331144**

(43) Veröffentlichungstag der Anmeldung: **22.05.85** **Patentblatt 85/21**

(84) Benannte Vertragsstaaten: **BE DE FR IT**

(71) Anmelder: **Hoesch Werke Aktiengesellschaft, Eberhardstrasse 12, D-4600 Dortmund 1 (DE)**

(72) Erfinder: **Lachmitz, Horst, Magnolienweg 9, D-4750 Unna (DE)**

(54) Verfahren zur Herstellung mehrschichtiger Schraubennahtrohre und Vorrichtung zur Durchführung des Verfahrens.

(57) Um bei einem Verfahren zur Herstellung mehrschichtiger Schraubennahtrohre aus mehreren lose übereinanderliegenden Bändern, die einzeln abgewickelt, gerichtet, deren Bandkanten gemeinsam auf eine aufeinander abgestimmte, jeweils grösstmögliche Breite bearbeitet und die einer Verformungsstation unter dem dem jeweiligen Rohrdurchmesser entsprechenden Einlaufwinkel zugeführt und danach gemeinsam zu einem Rohrstrang verschweisst werden, der anschliessend in einzelne Rohre zerteilt wird, eine Beeinträchtigung des Rohrschweissens durch in den Luftspalten zwischen den Schichten aufgeheizte Luft zu vermeiden, werden während der Bandverformung alle benachbarten Bandkanten (18, 19; 19, 20; 21, 22; 22, 23) durch Lichtbogenschweissung verbunden.

0141897

Hoesch Werke Aktiengesellschaft,
Eberhardstraße 12, 4600 Dortmund 1

Verfahren zur Herstellung mehrschichtiger Schraubennahtrohre und Vorrichtung zur Durchführung
des Verfahrens

Die Erfindung bezieht sich auf ein Verfahren zur
Herstellung mehrschichtiger Schraubennahtrohre
aus mehreren lose übereinanderliegenden Bändern,
die einzeln abgewickelt, gerichtet, deren Bandkanten gemeinsam auf eine aufeinander abgestimmte,
jeweils größtmögliche Breite bearbeitet und die
einer Verformungsstation unter dem dem jeweiligen
Rohrdurchmesser entsprechenden Einlaufwinkel
zugeführt und danach gemeinsam zu einem Rohrstrang verschweißt werden, der anschließend in
einzelne Rohre zerteilt wird, sowie auf eine
Vorrichtung zur Durchführung des Verfahrens.

Ein Verfahren dieser Art ist aus der DE-AS
27 45 389 bekannt.

Beim Herstellen von mehrschichtigen Schraubennahtrohren aus mehreren lose übereinanderliegenden
Bändern entstehen aufgrund der Banddickentoleranzen Luftspalte zwischen den Schichten. Solche
Luftspalte beeinträchtigen das Rohrschweißen,
wenn ein Anteil der in den Luftspalten aufgeheizten Luft über die flüssige Rohrschweißnaht
entweicht. Die Folge ist eine poröse Rohrschweißnaht mit geringer Festigkeit.

Von daher ist es Aufgabe der Erfindung, ein Verfahren zur Herstellung mehrschichtiger Schraubennahtrohre aus mehreren lose übereinanderliegenden Bändern der eingangs genannten Art sowie eine Vorrichtung zur Durchführung des Verfahrens zu schaffen, bzw. die eine Beeinträchtigung des Rohrschweißens durch Luftspalte zwischen den Schichten vermeidet.

Erfindungsgemäß wird diese Aufgabe dadurch gelöst, daß während der Bandverformung alle benachbarten Bandkanten durch Lichtbogenschweißung verbunden werden.

Die erfindungsgemäße Vorrichtung zur Durchführung des Verfahrens enthält mehrere Lichtbogenschweißköpfe zum Verschweißen der benachbarten Bandkanten.

Im folgenden wird die Erfindung anhand einer Zeichnung, in der ein Ausführungsbeispiel schematisch dargestellt ist, näher beschrieben.

Es zeigt

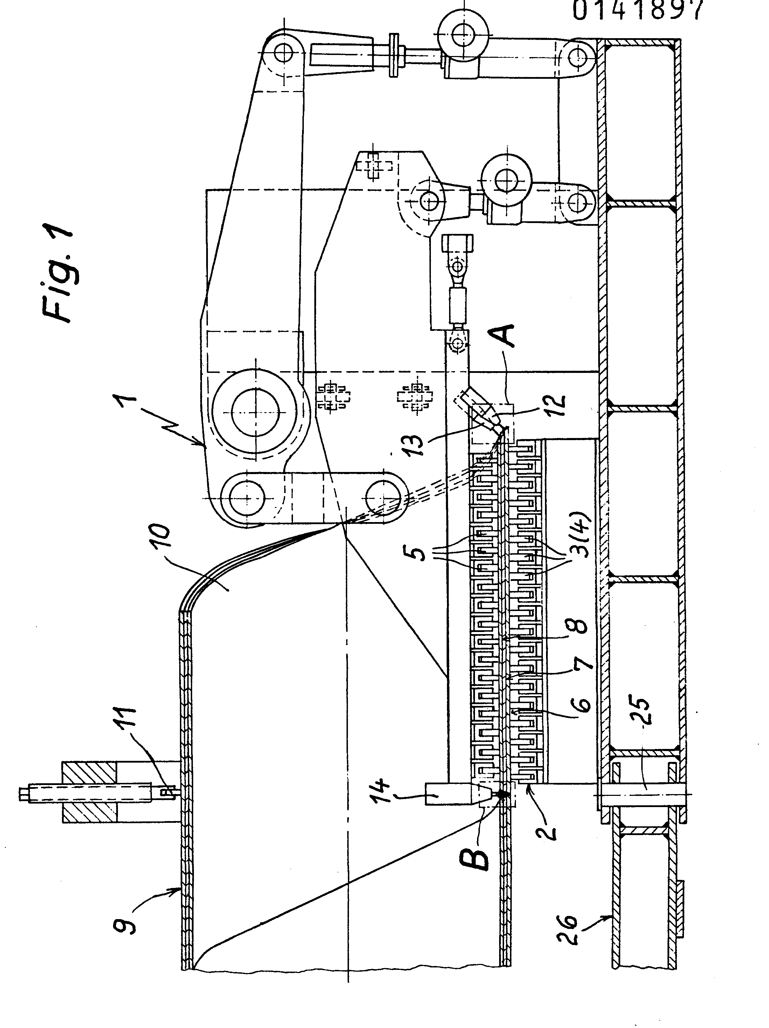

Fig. 1   einen Längsschnitt einer Verformungsstation mit einem Schnitt durch den Rohranfang,

Fig. 2   einen Ausschnitt "A" der Fig. 1 in vergrößertem Maßstab,

Fig. 3   einen Ausschnitt "B" der Fig. 1 in vergrößertem Maßstab.

Eine Verformungsstation 1 besitzt ein Dreiwalzenbiegesystem 2, das mit einer Vielzahl von einstellbaren Biegerollen 3, 4, 5 ausgeführt ist.

Zwischen den Biegerollen 3, 4, 5 werden drei kontinuierlich einlaufende Stahlbänder 6, 7, 8 zu einem dreischichtigen Schraubennahtrohr 9 geformt.

Zum Führen des Rohranfanges 10 sind mehrere Führungsrollen 11 angeordnet.

Die Verformungsstation 1 ist mit drei Lichtbogenschweißköpfen 12, 13, 14 ausgerüstet, von denen jeder während der Verformung der Stahlbänder 6, 7, 8 eine Schweißnaht 15, 16, 17 erzeugt.

Die Schweißnaht 15 verbindet die benachbarten Bandkanten 18, 19, die Schweißnaht 16 die benachbarten Bandkanten 19, 20.

Die Schweißnaht 17 stellt eine Verbindung der benachbarten Bandkanten 21, 22 und 22, 23 mit dem Rand 24 des Rohranfanges 10 dar.

Zur Schweißspaltsteuerung zwischen dem Rand 24 und der Bandkante 21 wird ein um einen Bolzen 25 schwenkbarer Rohrauslaufrahmen 26 benutzt.

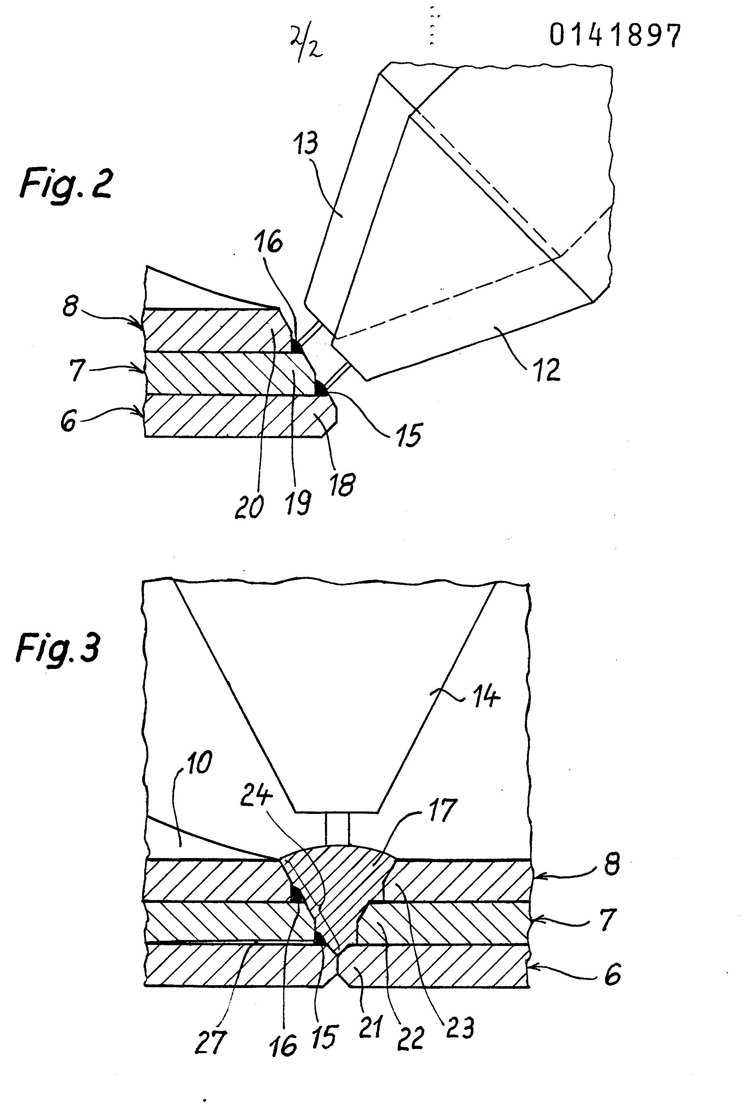

Beim Legen der Schweißnaht 17 kommt es zur Aufheizung der in einem Luftspalt 27 (Fig. 3) befindlichen Luft. Hierdurch wird jedoch das Rohrschweißen nicht beeinträchtigt, da die vorher gelegte Schweißnaht 15 eine Ausdehnung der aufgeheizten Luft in Richtung zur Schweißnaht 17 verhindert.

Die benachbarten Bandkanten 21, 22 und 22, 23 können auch durch Legen zweier nicht dargestellter Schweißnähte verbunden werden. Hierbei wird die Schweißnaht, die die benachbarten Bandkanten 21, 22 verbindet, zweckmäßigerweise als Heftnaht bis an den Rand 24 gelegt.

Das Fertigschweißen erfolgt dann auf separaten nicht dargestellten Nachschweißständen außerhalb der Verformungsstation 1.

Hoesch Werke Aktiengesellschaft,
Eberhardstraße 12, 4600 Dortmund 1

0141897

**Patentansprüche**

1.
Verfahren zur Herstellung mehrschichtiger Schraubennahtrohre aus mehreren lose übereinanderliegenden
Bändern, die einzeln abgewickelt, gerichtet, deren
Bandkanten gemeinsam auf eine aufeinander abgestimmte, jeweils größtmögliche Breite bearbeitet
und die einer Verformungsstation unter dem dem jeweiligen Rohrdurchmesser entsprechenden Einlaufwinkel zugeführt und danach gemeinsam zu einem
Rohrstrang verschweißt werden, der anschließend
in einzelne Rohre zerteilt wird, dadurch gekennzeichnet, daß während der Bandverformung alle
benachbarten Bandkanten (18, 19; 19, 20; 21, 22;
22, 23) durch Lichtbogenschweißung verbunden werden.

2.
Vorrichtung zur Durchführung des Verfahrens nach
Anspruch 1, gekennzeichnet durch mehrere Lichtbogenschweißköpfe (12, 13, 14) zum Verschweißen
der benachbarten Bandkanten (18, 19; 19, 20;
21, 22; 22, 23).

Fig. 1

0141897

Fig.2

Fig.3